# EUROPÄISCHE PATENTSCHRIFT

(11) **EP 3 581 958 B1**
(45) Veröffentlichungstag und Bekanntmachung des Hinweises auf die Patenterteilung: **12.08.2020**
(21) Anmeldenummer: 19175129.6
(22) Anmeldetag: 17.05.2019
(51) Int. Cl.: G01S 7/481, G01S 17/42, G01S 17/89

(54) **OPTOELEKTRONISCHER SENSOR UND VERFAHREN ZUR ERFASSUNG VON DREIDIMENSIONALEN BILDDATEN**
OPTOELECTRONIC SENSOR AND METHOD FOR RECORDING THREE-DIMENSIONAL IMAGE DATA
CAPTEUR OPTOÉLECTRONIQUE ET PROCÉDÉ DE DÉTECTION DES DONNÉES D'IMAGE TRIDIMENSIONNELLES

(30) Priorität: 11.06.2018 DE 102018113848
(43) Veröffentlichungstag der Anmeldung: 18.12.2019
(73) Patentinhaber: SICK AG, 79183 Waldkirch (DE)
(72) Erfinder: Marra, Martin, 79280 Au (DE); Gimpel, Hartmut, 79194 Gundelfingen (DE)

(56) Entgegenhaltungen:
- EP-A1- 3 330 741
- WO-A1-2017/112416
- DE-A1-102016 118 489
- US-A1- 2018 059 248

## Beschreibung

Die Erfindung betrifft einen optoelektronischen Sensor und ein Verfahren zur Erfassung von dreidimensionalen Bilddaten aus einem Überwachungsbereich nach dem Oberbegriff von Anspruch 1 beziehungsweise 14.

Mit einigen optoelektronischen Sensoren, zu denen ein Laserscanner und eine 3D-Kamera zählen, wird auch eine Tiefeninformation erfasst. So entstehen dreidimensionale Bilddaten, die auch als Entfernungsbild oder Tiefenkarte bezeichnet werden. Die zusätzliche Entfernungsdimension lässt sich in einer Vielzahl von Anwendungen nutzen, um mehr Informationen über Objekte in der erfassten Szenerie zu gewinnen und so verschiedene Aufgaben zu lösen.

Zur Ermittlung der Tiefeninformationen sind verschiedene Verfahren bekannt. Bei der hier betrachteten Lichtlaufzeitmessung (TOF, Time of Flight) wird eine Szene mit gepulstem oder amplitudenmoduliertem Licht beleuchtet. Der Sensor misst zu mehreren Orten entsprechend mehreren Messpunkten die Laufzeit des reflektierten Lichtes. In einem Pulsverfahren werden dafür Lichtpulse ausgesandt und die Dauer zwischen Sende- und Empfangszeitpunkt gemessen. In einem Phasenverfahren erfolgt eine periodische Amplitudenmodulation und Messung des Phasenversatzes zwischen Sende- und Empfangslicht.

In einer 3D-Kamera wird die Laufzeit für jeweilige Pixel oder Pixelgruppen gemessen. Beispielsweise sind in einem Pulsverfahren TDCs zur Laufzeitmessung mit den Pixeln verbunden oder sogar gemeinsam mit den Pixeln auf einem Wafer integriert. Eine Technologie für die Gewinnung von dreidimensionalen Bilddaten mit einem Phasenverfahren ist die Photomischdetektion (PMD).

In einem Laserscanner überstreicht ein von einem Laser erzeugter Lichtstrahl mit Hilfe einer Ablenkeinheit periodisch den Überwachungsbereich. Zusätzlich zu der gemessenen Abstandinformation wird aus der Winkelstellung der Ablenkeinheit auf die Winkellage des Objektes geschlossen, und so entstehen nach einer Abtastperiode Bilddaten mit Abstandswerten in Polarkoordinaten. Aufgrund der Abstandsmessung werden diese Bilddaten als dreidimensionale Bilddaten bezeichnet, auch wenn strenggenommen innerhalb einer Ebene die Beschreibung mit zwei Koordinaten möglich wäre. Durch zusätzliche Variation oder Mehrstrahlabtastung im Elevationswinkel werden Bilddaten aus einem Raumbereich erzeugt.

Ein gattungsgemäßer Sensor bietet eine gewisse laterale Auflösung, wobei lateral die XY-Ebene senkrecht zu der Z-Richtung bezeichnet, in der Abstände gemessen werden. Bei einer Lichtlaufzeitkamera ist dies die Pixelauflösung des Bildsensors. Laserscanner weisen eine bestimmte Winkelauflösung auf, die von der Wiederholrate der einzelnen Messungen und der Umdrehungsfrequenz abhängt.

Für herkömmliche 2D-Kameras sind sogenannte Superresolution-Verfahren bekannt. Dabei werden zwischen zwei aufeinanderfolgenden Belichtungszeiten kleine mechanische Bewegungen des Abbildungsobjektivs oder des Bildsensors vorgenommen, beispielsweise mit Hilfe eines Piezo-Aktors. Dadurch entstehen mehrere um einen Bruchteil des Pixelabstands gegeneinander versetzte Bilder, aus denen dann mit Hilfe von Bildverarbeitungsverfahren ein Bild berechnet wird, das höher aufgelöst ist, als die der originären Auflösung des Bildsensors entspricht. Ein vergleichbares Verfahren für Lichtlaufzeitkameras gibt es nicht.

Bei einem Laserscanner könnte prinzipiell für eine bessere Winkelauflösung in Umlaufrichtung die Wiederholrate der einzelnen Messungen heraufgesetzt werden. Das lässt aber in der Regel das Laserbudget nicht zu, wobei hier sowohl eine Überlast des Bauteils als auch Augenschutzbelange zu beachten sind. Dann bleibt nur die Möglichkeit, die Umdrehungsfrequenz herabzusetzen, wodurch sich aber die Ansprechzeit und Messwertwiederholrate verschlechtert. In Elevationsrichtung gibt es vergleichbare Probleme, wenn hier die Abtastung durch eine Scanbewegung erfolgt. Bei einem Mehrstrahlsystem könnte zudem die Anzahl der Messstrahlen und damit Messstrahlen erhöht werden, wodurch aber das System komplexer und teurer wird.

Es ist weiterhin bekannt, Entfernungen statistisch mit einer Vielzahl wiederholter Einzelmessungen zu messen. Dann lässt sich auch die Messzeit verlängern, wenn etwa bei dunklen oder weit entfernten Objekten eine gewünschte Messwertgüte noch nicht erreicht ist. Das ist aber kein Vorgehen für einen industriellen Sensor mit spezifizierter Ansprechzeit, die sich vielmehr an den ungünstigsten denkbaren Bedingungen ausrichtet. Außerdem bezieht sich das auf die Abstandsmessung und nicht die laterale Auflösung.

In der EP 2 469 296 A1 wird untersucht, wie sich derartige Pulsmittelungsverfahren für Laserscanner nutzen lassen. Da die Einzelmessungen bei fortgesetzter Umdrehungsbewegung erfolgen, sind geeignete Gruppierungen von Einzelmessungen zu finden. Dabei besteht die Möglichkeit, Winkelauflösung und Entfernungsauflösung gegeneinander zu tauschen, indem kleine oder große Gruppen gebildet werden. Diese Wahl wird aber fest getroffen, danach verhält der Laserscanner sich prinzipiell nicht mehr anders als ein Laserscanner mit einem Einzelpulsverfahren.

Für einstrahlige Laserscanner, die also nur eine einzige mittige Abtastebene erfassen, ist ein sogenanntes Interlace-Verfahren bekannt, das von Umlauf zu Umlauf mit leichtem Winkelversatz arbeitet. So wird eine 1°-Auflösung durch vier Umläufe mit 0,25°, 0,5° und 0,75° Winkelversatz auf eine 0,25°-Auflösung verbessert. Im Hinblick auf Ansprechzeiten ist aber gegenüber einem auf 1/4 der Umlauffrequenz verlangsamten System bei gleichbleibender, relativ zur Drehgeschwindigkeit entsprechend erhöhter Wiederholung der einzelnen Abstandsmessungen nichts gewonnen.

In der EP 2 746 808 A1 wird der Drehspiegel eines Laserscanners kontinuierlich durch Führung in einer Rille verkippt, wobei die Rille in einer Ausführungsform ein sinusförmiges Muster bildet, das sich über mehrere Umdrehungen erstreckt. Andere Laserscanner erreichen entsprechende Sinuskurven durch einen MEMS-Spiegel. Es dauert hier wie bei einem Interlace-Verfahren lange, bis die Messpunkte eine gewünschte Dichte erreicht haben. Außerdem sind die bis dahin erhaltenen Zwischenwerte wegen der Krümmungen der Sinuskurve unübersichtlich und schwer zu handhaben.

Die DE 10 2004 014 041 A1 befasst sich mit einem Sensorsystem zur Hinderniserkennung nach Art eines Laserscanners. In einer Ausführungsform sind drei Abtastsysteme um jeweils 120° in Drehrichtung gegeneinander versetzt angeordnet, deren Elevationswinkel durch einen Hubmotor variiert werden kann. Damit werden die von jeweiligen Abtastsystemen erfassten Sichtbereiche so eingestellt, dass sie gemeinsam einen möglichst großen, zusammenhängenden Elevationswinkelbereich abdecken. Das führt somit zu einem größeren überwachten Raumbereich, nicht aber zu einer Aufösungsverbesserung.

Die US2018/0059248A1 offenbart einen dynamisch gesteuerten Laser-Entfernungsmesser. Eine Anzahl von Lasern wird nacheinander auf Messpunkte gelenkt, um das Sichtfeld abzuscannen. Die Messpunkte können auf einem regelmäßigen Raster liegen, aber auch eine nicht gleichmäßige Verteilung bilden oder iterativ Objektkonturen nachbilden.

Es ist daher Aufgabe der Erfindung, die Erfassung von dreidimensionalen Bilddaten zu verbessern.

Diese Aufgabe wird durch einen optoelektronischen Sensor und ein Verfahren zur Erfassung von dreidimensionalen Bilddaten aus einem Überwachungsbereich nach Anspruch 1 beziehungsweise 14 gelöst. Der Überwachungsbereich wird mit moduliertem Sendelicht beleuchtet. Das an Objekten in dem Überwachungsbereich remittierte Sendelicht wird mit einem Lichtempfänger aufgenommen, und zwar zugleich von mindestens zwei Orten. Diese beiden Orte entsprechen einerseits zwei Messpunkten oder Messbereichen in dem Überwachungsbereich und andererseits zwei Erfassungen in dem Sensor, beispielsweise durch zwei Photodioden oder zwei Pixel beziehungsweise Pixelbereiche. Die beiden Orte liegen in einem ersten Auflösungsraster, und aus ihrem gegenseitigen Abstand ergibt sich eine originäre Auflösung des Sensors. Eine Steuer- und Auswertungseinheit bestimmt Lichtlaufzeiten für beide Orte und damit Abstände zu Objekten an beiden Messpunkten, an denen das Sendelicht remittiert wurde. Diese Messung wird dann unter Verschiebung gegen das erste Auflösungsraster mindestens einmal wiederholt. Insgesamt werden daraus dreidimensionale Bilddaten mit einer verbesserten lateralen Auflösung in einem zweiten Auflösungsraster feiner als das erste Auflösungsraster gewonnen.

Die Erfindung geht nun von dem Grundgedanken aus, die verfügbare Sendeleistung auf die tatsächlichen Messpunkte zu konzentrieren. Anstelle einer Flächenbeleuchtung wird eine Beleuchtungseinheit mit auf Teilbereiche des Überwachungsbereichs konzentrierter Beleuchtung eingesetzt. Damit werden nur die Teilbereiche entsprechend den Orten des gleichzeitigen Lichtempfangs beleuchtet, von denen der Lichtempfänger tatsächlich Licht empfängt. Die Teilbereiche werden an die jeweiligen Orte angepasst und folglich mit der Messwiederholung verändert, wenn die Orte gegen das erste Auflösungsraster verschoben werden.

Die Erfindung hat den Vorteil, dass eine Auflösungsverbesserung in lateraler Richtung erreicht wird. Dabei bleibt es ohne Beschränkung der Allgemeinheit bei der Konvention, die Richtung der Abstandsmessung als Z-Richtung zu bezeichnen, so dass die laterale Richtung eine Richtung quer zu der Z-Richtung, insbesondere die XY-Richtung ist. Es ist keinesfalls erforderlich, mit der Ausgabe von Messwerten zu warten, bis alle Messwiederholungen abgeschlossen sind und die Messdaten in dem zweiten Auflösungsraster bereitstehen. Vielmehr entsteht schon sehr schnell ein grobes Bild des Überwachungsbereichs und dann mit längerer Beobachtungsdauer ein räumlich höher aufgelöstes Bild. Die jeweilige Abwägung zwischen kurzer Messzeit und hoher Auflösung kann flexibel getroffen werden, beispielsweise durch Parametrierung oder sogar dynamisch beziehungsweise für Unterregionen des Überwachungsbereichs unterschiedlich. Ein Beispiel für gemischte Anforderungen ist die Navigation, in der fixe Objekte sehr genau erfasst sein sollen, aber dennoch auch auf schnell bewegte Objekte reagiert werden soll. Im Vergleich zu einem Sensor mit originär hoher Auflösung durch hohe Pixelzahl von Beleuchtungseinheit und/oder Lichtempfänger in einer Lichtlaufzeitkamera oder besonders aufwändigem, leistungsfähigem Lasersender beziehungsweise zahlreichen Abtastebenen in einem Laserscanner sind die Hardware-Anforderungen erfindungsgemäß gering. Damit wird sowohl der Bedarf an rasch verfügbaren Messdaten als auch, nach entsprechend längerer Messzeit für die Messwiederholungen, an hoch aufgelösten Messdaten erfüllt.

Die Beleuchtungseinheit ist bevorzugt dafür ausgebildet, ein Beleuchtungsmuster mit auf die mindestens zwei Orte im ersten Auflösungsraster konzentrierter Beleuchtung zu erzeugen. Mit einem derart gezielt strukturierten Beleuchtungsmuster wird die verfügbare Sendeleistung auf die Orte konzentriert, an denen gemessen wird. Die Struktur muss andererseits auch nicht genauer sein als das erste Auflösungsraster. Das Beleuchtungsmuster wird bei den Messwiederholungen verschoben.

Die Steuer- und Auswertungseinheit ist bevorzugt dafür ausgebildet, bei einer Messwiederholung die Veränderung von Beleuchtung und Lichtempfang aneinander zu koppeln. Die Orte und damit Messpunkte werden sende- und empfangsseitig gleichermaßen verändert. Durch diese Kopplung werden ganz gezielt nur diejenigen Bereiche ausgeleuchtet, in denen auch gemessen wird. Beleuchtung und Lichtempfang sind vorzugsweise sehr genau aufeinander abgestimmt. Dabei sind Verschiebungen von Bruchteilen von Pixeln eines Bildsensors beziehungsweise Bruchteilen von 1°-Gradschritten bei einem Laserscanner zu berücksichtigen. Andernfalls wird bei Überstrahlen eines Ortes die verfügbare Sendeleistung nicht optimal genutzt, oder bei einem teilweisen Verfehlen des Ortes das Signal-Rausch-Verhältnis verschlechtert, weil der Lichtempfänger nicht ausreichend beleuchtet ist.

Dem Lichtempfänger ist bevorzugt eine veränderbare Empfangsoptik zugeordnet und/oder Beleuchtungseinheit weist vorzugsweise eine veränderbare Sendeoptik auf, um durch Anpassung der Optik die Orte zu verschieben. Dadurch müssen für die gewünschten Änderungen der Orte zwischen den Messwiederholungen nur minimale Veränderungen vorgenommen werden, und die Optiken können mit relativ unaufwändigen Aktoriken beeinflusst werden.

Die Empfangsoptik und/oder die Sendeoptik weist bevorzugt eine durch elektrische Ansteuerung kippbare Flüssiglinse auf. Das ist eine beispielhafte Ausführungsform einer sehr kompakten, günstigen veränderbaren Optik. Das Prinzip ist ähnlich wie eine Flüssiglinse mit Fokusverstellung, nur dass nicht die Wölbung einer Grenzschicht zwischen zwei nicht mischbaren Medien verändert wird, sondern deren Orientierung. Solche kippbaren Flüssiglinsen mit entsprechender Elektrodenansteuerung sind an sich bekannt. Andere beispielhafte Aktoriken, mit denen die Optik verändert werden kann, sind Piezo-Aktoren, MEMS-Spiegel, Drehspiegel oder Drehprisma oder ein akustooptischer Modulator.

Der Lichtempfänger weist bevorzugt eine Matrixanordnung von SPAD-Lichtempfangselementen auf, die einzeln oder gruppenweise aktivierbar sind. SPADs sind sehr empfindlich und hoch integrierbar, so dass ein besonders kompakter Sensor aufgebaut werden kann. Sie können durch Absenken der Vorspannung unter die Durchbruchspannung praktisch inaktiv geschaltet werden. Das lässt sich als eine Art elektronische Blende nutzen, die durch Inaktivschalten beliebige Unterregionen des Lichtempfängers effektiv abdunkelt. Diese elektronische Blende ist eine Möglichkeit, die Orte des Lichtempfangs festzulegen und mit den Messwiederholungen anzupassen.

Die Beleuchtungseinheit weist bevorzugt eine Matrixanordnung von VCSEL-Sendeelementen auf, die einzeln oder gruppenweise aktivierbar sind. Damit werden auf Sendeseite mit einem kompakten und hoch integrierten Baustein Beleuchtungsmuster entsprechend den Messpunkten ermöglicht, d. h. eine gezielte Wahl und Anpassung der zu beleuchtenden Teilbereiche für die Orten des Lichtempfangs.

Die Steuer- und Auswertungseinheit ist bevorzugt dafür ausgebildet, bei einer Messwiederholung die Orte so zu verschieben, dass sich die Auflösung gegenüber dem ersten Auflösungsraster sukzessive nach einem Intervallhalbierungsschema verdoppelt. Im ersten Schritt wird folglich das Auflösungsraster um die Hälfte des Abstands zwischen zwei Punkten verschoben und liegt dann quasi mittig im ursprünglichen ersten Auflösungsraster. Die nächsten beiden Schritte gehen dann jeweils ein Viertel des Abstands zurück beziehungsweise vor. Für die weitere Verdopplung der Auflösung werden dann vier Messwiederholungen im Abstand ein Achtel in den bisherigen Lücken benötigt, und ggf. wird das Intervallhalbierungsschema analog fortgesetzt. Alternativ werden in n Messwiederholungen linear die Orte um jeweils 1/n des Abstands weiterverschoben. Bei einem Intervallhalbierungsschema wird mehr als einmal verschoben, da es sich für nur n=2 noch nicht von diesem linearen Verschieben unterscheidet.

Der Sensor ist bevorzugt als Laserscanner ausgebildet und weist eine drehbare Ablenkeinheit zur periodischen Abtastung des Überwachungsbereichs auf. Die drehbare Ablenkeinheit ist ein Drehspiegel, insbesondere Polygonspiegelrad, zur periodischen Strahlablenkung bei stationär angeordnetem Lichtsender und Lichtempfänger, oder alternativ eine mitdrehende Abtasteinheit mit Lichtsender und Lichtempfänger. Im Zusammenhang mit Laserscanner ist die Bedeutung einiger Begriffe zu erläutern. Die wiederholten Einzelmessungen eines Laserscanners während einer Umdrehung der Abtasteinheit bilden erst gemeinsam eine Messung, d. h. eine Messwiederholung entspricht einer Umdrehung. Der erfindungsgemäße gleichzeitige Lichtempfang bedeutet, dass schon pro Einzelmessung mehr als ein Messpunkt erfasst wird. Der Laserscanner hat also mehrere Messstrahlen, die gleichzeitig aktiv sein können. Das erste Auflösungsraster wird von dem Abstand dieser Messstrahlen und den Winkelschritten gebildet, zu denen im Verlauf einer Umdrehung Einzelmessungen stattfinden.

Der Laserscanner weist bevorzugt in Drehrichtung der Ablenkeinheit mehrere Abtasteinheiten mit gegenseitigem Versatz ungleich dem ersten Auflösungsraster auf. Bei einem Laserscanner ist die Auflösung in Drehrichtung und in Elevation zu unterscheiden. In dieser Ausführungsform geht es um eine Verbesserung der Auflösung in Drehrichtung. Eine Abtasteinheit erzeugt im Laufe der Umdrehung ein erstes Auflösungsraster in Form von Winkelschritten, und die weiteren Abtasteinheiten sind um Bruchteile der Winkelschritte versetzt, um das erste Auflösungsraster zu verfeinern. Der Winkelversatz kann mechanisch sein oder durch Zeitverzögerungen erreicht werden, indem die weiteren Abtasteinheiten ihre Messung jeweils etwas verzögern, so dass sich bei deren Einzelmessung die Abtasteinheit schon um den gewünschten Bruchteil eines Winkelschritts weitergedreht hat. Die Abteinheiten können Einstrahler sein und nur eine mittige Ebene hochaufgelöst erfassen. Mit einem Mehrstrahler kann entweder durch Anordnung in der mittigen Ebene die Auflösung noch weiter erhöht werden, oder es kommen durch Anordnung mit Anteil in Elevation zusätzliche Ebenen hinzu.

Die Abtasteinheiten sind bevorzugt verkippbar oder um ihre Blickrichtung drehbar ausgebildet. Dadurch werden die abgetasteten Ebenen variiert. Das wird alternativ auch durch Drehen der Abtasteinheiten um ihre eigene Blickrichtung erreicht, wobei eine Drehung sowohl Elevation als auch Ausrichtung in Drehrichtung verändert. Bei einem Laserscanner mit Drehspiegel oder Polygonspiegelrad als Ablenkeinheit kann alternativ die Ablenkeinheit selbst verkippt werden. Bei einem Polygonspiegelrad können im Übrigen schon die Facetten zueinander verkippt sein, die dadurch entstehende Auflösung ist aber noch das erste Auflösungsraster, da ja eine Messwiederholung einer vollständigen Umdrehung entspricht.

Die Steuer- und Auswertungseinheit ist bevorzugt dafür ausgebildet, die Veränderungen der Orte an die Objekte anzupassen. Das Mess- und Ausgabeverhalten des Sensors wird so dynamisch an die Szenerie angepasst. Aus früheren Messungen lässt sich erkennen, ob sich Objekte schnell oder langsam bewegen. Ein langsames Objekt sollte dann eher mit guter Auflösung vermessen werden, ein schnelles Objekt mit kurzer Messzeit. Dementsprechend werden die Orte bei langsamen Objekten oft variiert und seltener Messwerte ausgegeben, bei schnellen Objekten werden umgekehrt die Orte weniger oder gar nicht variiert, und dafür liegen aktuelle Messwerte nach wenigen oder sogar nach jeder Messwiederholung vor. Insgesamt wird so eine Abwägung zwischen hoher lateraler Ortsauflösung und kurzer Messzeit schnell veränderlich je nach aktuell vorliegenden Messdaten möglich.

Die Steuer- und Auswertungseinheit ist bevorzugt dafür ausgebildet, die Veränderungen der Orte lokal unterschiedlich vorzunehmen. Das betrifft erneut vornehmlich den Unterschied zwischen schnellen und langsamen Objekten. Die im Vorabsatz genannten Anpassungen werden in dieser Ausführungsform lokal vorgenommen, oder sogar lokal und dynamisch. Es gibt folglich Teilabschnitte der Szenerie oder des Überwachungsbereichs mit vielen Veränderungen der Orte und hoher Auflösung und umgekehrt Teilabschnitte mit wenigen oder keinen Veränderungen und geringerer Auflösung. Somit wird die mehrfach genannte Abwägung zwischen hoher lateraler Ortsauflösung und kurzer Messzeit getrennt für unterschiedliche Regionen vorgenommen.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung einer Ausführungsform eines Sensors als Lichtlaufzeitkamera;
- Fig. 2a-d: eine beispielhafte Darstellung in verschiedenen Messwiederholungen gegenüber einem ersten Auflösungsraster verschobener Messpunkte;
- Fig. 3: eine schematische Darstellung einer Ausführungsform eines Sensors als Laserscanner;
- Fig. 4: eine Draufsicht auf zwei rotierende Abtasteinheiten mit gegenüber einem ersten Auflösungsraster verschobenen gegenseitigen Winkelversatz;
- Fig. 5: eine dreidimensionale Ansicht zweier rotierender Abtasteinheiten mit gegenseitigem Winkelversatz in Elevation;
- Fig. 6a-c: eine beispielhafte Darstellung in verschiedenen Wiederholungen durch Verkippen von Abtasteinheiten verschobener Messpunkte;
- Fig. 7a-c: eine beispielhafte Darstellung in verschiedenen Wiederholungen durch Verdrehen von Abtasteinheiten verschobener Messpunkte; und
- Fig. 8: eine Darstellung verschiedener Erfassungsschemata mit gegenüber einem ersten Auflösungsraster verschobenen Messpunkten.

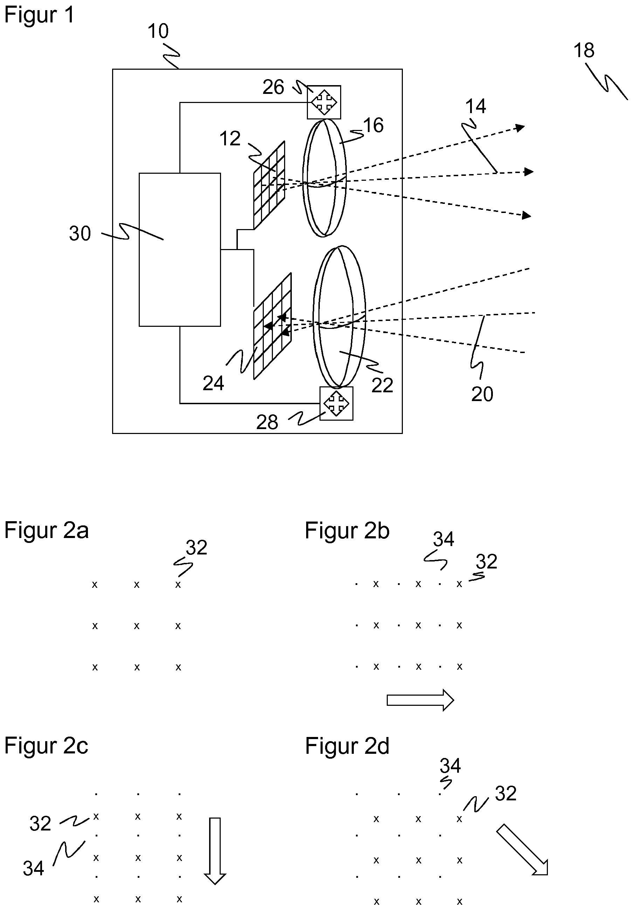

Figur 1 zeigt eine schematische Darstellung eines Sensors 10 in einer Ausführungsform als Lichtlaufzeitkamera. Mit einem Lichtsender 12 wird moduliertes Sendelicht 14 erzeugt und damit durch eine Sendeoptik 16 ein Überwachungsbereich 18 beleuchtet. Der Lichtsender 12 ist in der Lage, ein strukturiertes Beleuchtungsmuster mit Licht in bestimmten Teilbereichen des Überwachungsbereichs 18 zu erzeugen. Damit kann die verfügbare Lichtleistung auf die tatsächlichen Messpunkte konzentriert werden, was im Gegensatz zu einer einfachen Flächenbeleuchtung das Signal-Rausch-Verhältnis erheblich verbessert. Als Lichtsender 12 wird hier ein VCSEL-Array verwendet, dessen VCSEL einzeln oder gruppenweise entsprechend dem gewünschten Beleuchtungsmuster aktiviert werden. Andere Beispiele eines geeigneten Lichtsenders sind eine Mehrfachanordnung anderer Lichtquellen, wie LEDs oder Kantenemitter-Laserdioden, oder ein optisches Phased Array.

Trifft Sendelicht 14 in dem Überwachungsbereich 18 auf Objekte, so wird ein Teil als remittiertes Sendelicht 20 zu dem Sensor 10 zurückgeworfen. Das remittierte Sendelicht 20 gelangt durch eine Empfangsoptik 22 auf einen Lichtempfänger 24, der hier als SPAD-Array ausgebildet ist. SPADs sind hochempfindlich und hoch integrierbar, und sie bieten die Möglichkeit, durch Absenken der Vorspannung unter die Durchbruchspannung praktisch inaktiv zu werden. Dadurch können jeweils nur solche SPADs aktiv geschaltet werden, die gewünschten Messpunkten entsprechen. Alternativ zu einem SPAD-Array ist eine Mehrfachanordnung von Photodioden oder APDs oder ein anderer Matrixempfänger beispielsweise in CCD- oder CMOS-Technik denkbar, bei dem dann gegebenenfalls nur bestimmte Pixel oder Pixelgruppen entsprechend gewünschten Messpunkten ausgelesen werden.

Die Sendeoptik 16 und die Empfangsoptik 22 sind jeweils nur durch eine einfache Linse repräsentiert, die stellvertretend für beliebige Optiken mit mehrlinsigen Objektiven, Blenden und sonstige optische Elemente steht. Auch eine reflexive oder diffraktive Optik ist vorstellbar. Eine sendeseitige Optikverstellung 26 und eine empfangsseitige Optikverstellung 28 beispielsweise mit einer Piezo-Aktorik bietet die Möglichkeit, die Optiken 16, 22 zu bewegen. Die Bewegung erfolgt lateral oder in XY-Richtung senkrecht zu der Z-Richtung, in welche der Sensor 10 Entfernungen misst, und mit dieser Bewegung wird die Sende- beziehungsweise Empfangsrichtung verändert. Eine Bewegung in Z-Richtung zur Fokusverstellung ist aber auch möglich.

Die Veränderung der Sende- und Empfangsrichtung durch Optikverstellungen 26, 28 ist nur ein Ausführungsbeispiel. Zunächst können alternativ Lichtsender 12 und Lichtempfänger 24 oder der ganze Sensor 10 bewegt werden. Weitere Möglichkeiten sind optische Elemente wie MEMS-Spiegel, Drehspiegel, Drehprisma oder ein akustooptischer Modulator. Eine bevorzugte Ausführungsform verwendet eine Flüssiglinse, in der die Grenzschicht zwischen zwei nicht mischbaren Medien durch Ansteuerung einer Elektrodenanordnung verkippt werden kann. Bei der dargestellten Ausführungsform mit VCSEL-Array und SPAD-Array kann eine Optikverstellung 26, 28 oder ein Ersatz dafür auch ganz entfallen, indem die Bewegung durch gezieltes Aktivieren bestimmter VCSEL beziehungsweise SPADS emuliert wird.

Eine Steuer- und Auswertungseinheit 30 ist mit Lichtsender 12, Lichtempfänger 24 und den Optikverstellungen 26, 28 verbunden. Damit wird das Sendelicht 14 moduliert, etwa mit Pulsen für ein Einzelpulsverfahren oder ein Pulsmittelungsverfahren oder einer periodischen Amplitudenmodulation für ein Phasenverfahren, und aus dem Empfangssignal des Lichtempfängers 24 wird mit einem Lichtlaufzeitverfahren der Abstand zu Messpunkten in dem Überwachungsbereich bestimmt. Solche Lichtlaufzeitverfahren sind an sich bekannt, etwa mittels TDCs für ein Pulsverfahren oder PMD für ein Phasenverfahren. Zumindest Teile der Steuer- und Auswertungseinheit 30 können mit dem Lichtsender 12 beziehungsweise dem Lichtempfänger 24 auf einem gemeinsamen Baustein integriert werden, etwa eine Signalerzeugung für die Modulation des Sendelichts 14 oder TDCs für die Auswertung des Empfangssignals.

Figur 2a zeigt beispielhafte Messpunkte 32 des Sensors 10, in denen jeweils ein Abstand mittels Lichtlaufzeitverfahren bestimmt wird. Die Ansicht ist eine Vorderansicht, die Messpunkte 32 bilden also eine laterale Anordnung. Zwischen den Messpunkten 32 liegen Abstände oder Lücken, an denen kein Messwert ermittelt wird. Die Abstände können der natürlichen Auflösung entsprechen, d. h. dem Pixelpitch, oder es werden künstlich nur Pixel aktiviert oder ausgelesen, zwischen denen mindestens ein inaktives Pixel liegt.

In einer Messung werden gleichzeitig die Abstände für die Messpunkte 32 erfasst. Die Messung wird anschließend mindestens einmal nach einer Verschiebung der Messpunkte 32 mittels der Optikverstellungen 26, 28 wiederholt. Die Figuren 2a-d zeigen insgesamt vier solcher Messwiederholungen ohne Verschiebung, mit Verschiebung in X-Richtung, mit Verschiebung in Y-Richtung und mit Verschiebung sowohl in X-Richtung als auch in Y-Richtung, wie jeweils durch Pfeile angedeutet.

Die Messpunkte 32 bilden innerhalb einer Messwiederholung ein erstes Auflösungsraster 34. Die Verschiebung zwischen den Messwiederholungen ist kleiner als der Abstand zwischen zwei Punkten des Auflösungsrasters 34. Dabei ist eine Verschiebung um mehr als diesen Abstand möglich, aber unbeachtlich, die Betrachtung erfolgt sozusagen modulo Abstand in dem Auflösungsraster 34. Durch diese kleine Verschiebung werden mit den Messwiederholungen Messpunkte 32 in den Lücken des ursprünglichen ersten Auflösungsrasters 34 erfasst. Nach den Messwiederholungen liegen Messwerte in einem zweiten Auflösungsraster vor, dessen Abstand durch die Verschiebungen entsteht und das feiner ist als das erste Auflösungsraster.

Im gezeigten Beispiel wird mit der Messwiederholung gemäß Figur 2b die X-Auflösung verdoppelt, mit der Messwiederholung gemäß Figur 2c die Y-Auflösung, und mit der Messwiederholung gemäß Figur 2d werden die Lücken in X-Richtung der mit Figur 2c ergänzen Zeile gefüllt. Somit ist insgesamt die Auflösung verdoppelt. Das ist nur eines von zahlreichen Beispielen, wie die Verschiebungen zu verschiedensten Auflösungsverbesserungen führen können. Es liegen schon nach der ersten Messwiederholung Messpunkte 32 im ersten Auflösungsraster 34 vor. Es besteht also die Möglichkeit, sich wahlweise für das schnelle Bereitstellen von Messwerten nach nur einer Messwiederholung oder für eine genauere Messung nach mehreren Messwiederholungen zu entscheiden.

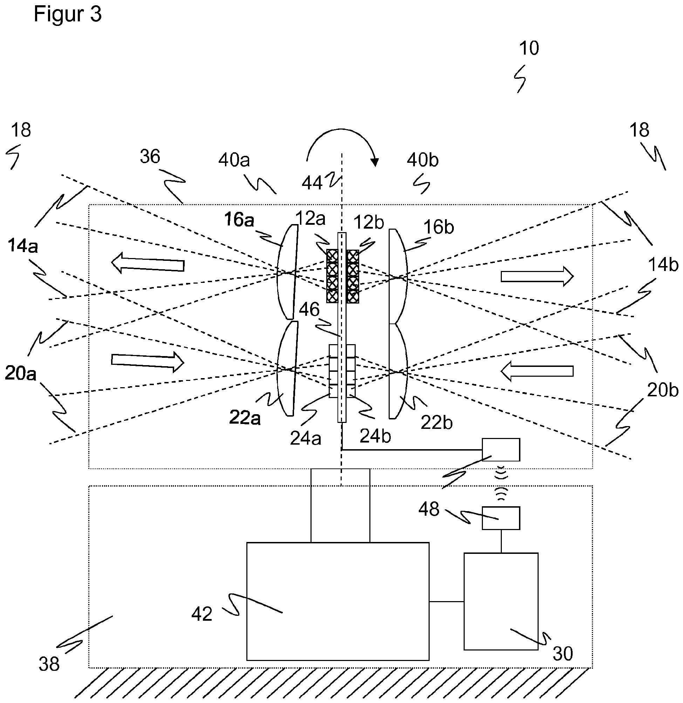

Figur 3 zeigt eine schematische Schnittdarstellung durch eine weitere Ausführungsform des Sensors 10 als Laserscanner, hier insbesondere als Mehrstrahl-Laserscanner. Der Sensor 10 umfasst in grober Aufteilung eine bewegliche Ablenkeinheit 36 und eine Sockeleinheit 38. Die Ablenkeinheit 36 bildet den eigentlichen optischen Messkopf, während in der Sockeleinheit 38 weitere Elemente wie eine Versorgung, Auswertungselektronik, Anschlüsse und dergleichen untergebracht sind. Im Betrieb wird mit Hilfe eines Antriebs 42 der Sockeleinheit 38 die Ablenkeinheit 36 in eine Drehbewegung um eine Drehachse 44 versetzt, um so den Überwachungsbereich 18 periodisch abzutasten.

Die Ablenkeinheit 36 weist in diesem Ausführungsbeispiel zwei Abtasteinheiten 40a-b jeweils mit Lichtsender 12a-b, Sendeoptik 16a-b, Lichtempfänger 24a-b und Empfangsoptik 22a-b auf. In einem Laserscanner kommen neben einem VCSEL-Array und einem SPAD-Array vorzugsweise entsprechende Zeilenanordnungen, aber auch die bereits genannten Mehrfachanordnungen mit nur einigen Lichtquellen und Lichtempfangselementen als Lichtsender 12a-b und Lichtempfänger 24a-b in Betracht. Optikverstellungen 26, 28 sind hier nicht vorgesehen, aber in anderen Ausführungsformen möglich. Stattdessen sind die Abtasteinheiten 40a-b zueinander in Elevation verkippt, so dass die Sende- und Empfangsrichtung von Sendelicht 14a und remittiertem Sendelicht 20a der einen Abtasteinheit 40a gegenüber Sendelicht 14b und remittiertem Sendelicht 20b der anderen Abtasteinheit 40b in einem Winkel steht. Übrigens müssen die beiden Abtasteinheiten 40a-b auch nicht baugleich sein wie dargestellt, und können insbesondere unterschiedliche Strahlzahlen haben.

Lichtsender 12a-b und Lichtempfänger 24a-b sind in dieser Ausführungsform gemeinsam auf einer Leiterkarte 46 angeordnet, die auf der Drehachse 44 liegt und mit der Welle des Antriebs 42 verbunden ist. Dies ist nur beispielhaft zu verstehen, es sind praktisch beliebige Anzahlen und Anordnungen von Leiterkarten denkbar. Auch der optische Grundaufbau mit biaxial nebeneinanderliegendem Lichtsender 12a-b und Lichtempfänger 24a-b ist nicht zwingend und durch jede an sich von einstrahligen optoelektronischen Sensoren oder Laserscannern bekannte Bauform ersetzbar. Ein Beispiel dafür ist eine koaxiale Anordnung mit oder ohne Strahlteiler.

Eine berührungslose Versorgungs- und Datenschnittstelle 48 verbindet die bewegliche Ablenkeinheit 36 mit der ruhenden Sockeleinheit 38. Dort befindet sich die Steuer- und Auswertungseinheit 30, die zumindest teilweise auch auf der Leiterkarte 46 oder an anderem Ort in der Ablenkeinheit 36 untergebracht sein kann. Die Steuer- und Auswertungseinheit 30 misst wie prinzipiell schon zu Figur 1 Entfernungen mit einem Lichtlaufzeitverfahren. Sie steuert außerdem den Antrieb 42 und erhält das Signal einer nicht gezeigten, von Laserscannern allgemein bekannten Winkelmesseinheit, welche die jeweilige Winkelstellung der Ablenkeinheit 36 bestimmt. Damit stehen nach jeder Umdrehung mit Winkel und Entfernung zweidimensionale Polarkoordinaten aller Messpunkte in einer Abtastebene zur Verfügung. Genaugenommen wird nur einem Elevationswinkel von 0°, also einem in Figur 3 nicht vorhandenen horizontalen Sendelichtstrahl, eine Ebene abgetastet. Mit Abtaststrahlen wie dargestellt, die demgegenüber einen Elevationswinkel aufweisen, wird die Mantelfläche eines Kegels abgetastet, der je nach Elevationswinkel unterschiedlich spitz ausgebildet ist. Insgesamt entsteht als Abtastgebilde eine Art Schachtelung von mehreren Sanduhren. Auch diese Flächen werden hier manchmal vereinfachend als Abtastebenen bezeichnet.

Der dargestellte Sensor 10 ist ein Laserscanner mit rotierendem Messkopf, nämlich der Ablenkeinheit 36. Alternativ ist auch eine periodische Ablenkung mittels Drehspiegel oder einem Polygon- beziehungsweise Facettenspiegelrad denkbar. Weiterhin kann die Scanbewegung zur Erzeugung der Scanebene stattdessen auch mit anderen bekannten Methoden erzeugt werden, beispielsweise MEMS-Spiegeln, optical phased arrays oder akusto-optischen Modulatoren.

Als eine Messung wird bei einem Laserscanner nicht die Einzelmessung eines Abstands aufgefasst, sondern die Gesamtheit der Einzelmessungen während einer Umdrehung. Das erste Auflösungsraster wird einerseits durch die Wiederholrate der Einzelmessungen und damit die Winkelauflösung in Drehrichtung und andererseits durch den Abstand zwischen den mehreren Strahlen gebildet, die bereits in einer Einzelmessung gleichzeitig mehrere Messpunkte erfassen. Eine Messwiederholung erfolgt durch eine weitere Umdrehung. In Ausführungsformen wie in Figur 3 mit mehreren Abtasteinheiten 40a-b kann auch die zweite Messung durch die andere, verkippte Abtasteinheit 40b-a als Messwiederholung verstanden werden.

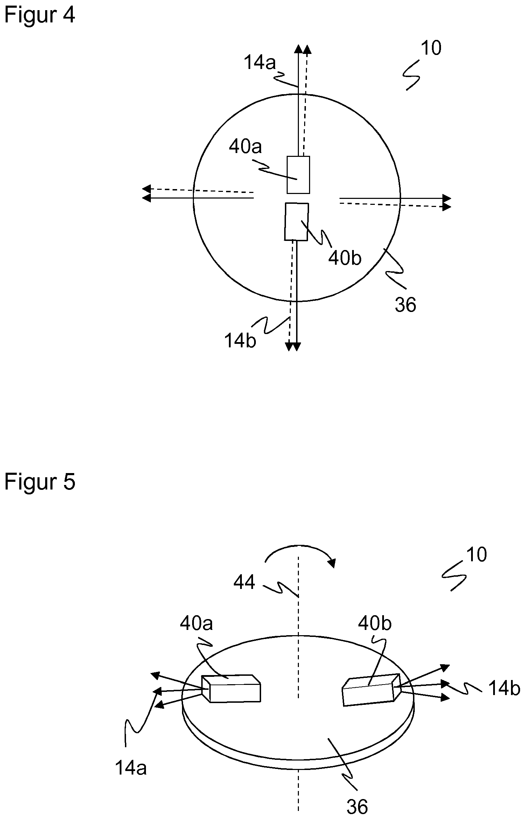

Figur 4 zeigt eine Draufsicht auf die rotierende Ablenkeinheit 36 mit zwei Abtasteinheiten 40a-b, um die Auflösungserhöhung durch Versatz aus einem ersten Auflösungsraster im Zusammenhang mit Laserscannern näher zu erläutern. Figur 4 betrifft eine Auflösungserhöhung in Drehrichtung, während später unter Bezugnahme auf Figur 5 eine alternative oder zusätzliche Auflösungserhöhung in Elevation diskutiert wird.

In dem Ausführungsbeispiel nach Figur 4 wird die Auflösungserhöhung dadurch bewirkt, dass die zweite Abtasteinheit 40b gegenüber der ersten Abtasteinheit 40a in Drehrichtung verkippt ist. Dabei kommt es nur um den Anteil der Verkippung an, der keinem Vielfachen des Winkelabstands entspricht. Wenn beispielsweise die Winkelschritte des ersten Auflösungsrasters 1° betragen, also einmal je 1° eine Einzelmessung erfolgt, so könnte ein Versatz zwischen den beiden Abtasteinheiten 40a-b bei 0,5° liegen. Tatsächlich liegt der Versatz gemäß der Darstellung in Figur 4 sinnvollerweise bei 180,5°, aber der Anteil 180° im Winkelraster trägt außer einem minimalen Zeitversatz nichts bei.

Die Verkippung kann physikalisch sein wie dargestellt. Es ist aber auch möglich, die Einzelmessung einer Abtasteinheit 40b um weniger als die Periode einer Einzelmessung zu verzögern. Das hat denselben Effekt, da sich die Ablenkeinheit 36 während der Verzögerung um einen entsprechenden Bruchteil des Winkelabstands weiterdreht. Eine weitere Möglichkeit, die Auflösung in Drehrichtung zu erhöhen, besteht darin, dass eine Abtasteinheit 40a-b mit mindestens zwei Strahlen eingesetzt wird, die horizontal nebeneinander liegen. So wird der Winkelversatz in Drehrichtung schon innerhalb der Abtasteinheit 40a-b geschaffen.

Zwischen zwei Einzelmessungen bleibt der Lichtsender 12 vorzugsweise aus, um seine Erwärmung zu verringern. Deshalb kann der Lichtsender 12 innerhalb der genutzten Messzeitpunkte stärker bestromt oder öfter eingeschaltet werden, ohne seine Lebensdauer zu reduzieren.

Gegebenenfalls können die räumlich versetzten Messbereiche 34 auch teilweise überlappen mit den Messbereichen 32 oder den Messbereichen 34 aus einem anders verschobenen Raster.

Figur 5 zeigt eine dreidimensionale Ansicht der rotierenden Ablenkeinheit 36 einer weiteren Ausführungsform eines Laserscanners nun mit Auflösungserhöhung in Elevation beziehungsweise im Ebenenwinkel. Die beiden Abtasteinheiten 40a-b erzeugen je drei Abtaststrahlen 14a-b. Sie sind gegenseitig in Elevation verkippt, somit sind die jeweiligen drei Abtastebenen quasi ineinander verschränkt und füllen so gegenseitige Lücken auf. Abgesehen von der ohnehin nur beispielhaften Anzahl der Abtaststrahlen 14a-b entspricht dies der Darstellung gemäß Figur 3. Im Übrigen ist natürlich auch die Anzahl von zwei Abtasteinheiten 40a-b jeweils nur beispielhaft.

Die Orientierung der Abtasteinheiten 40a-b ist vorzugsweise nicht starr, sondern veränderbar. Damit können die beiden Abtasteinheiten 40a-b der Figur 5 auch als nicht zwei physische Einheiten, sondern zwei Momentaufnahmen nur einer einzigen Abtasteinheit zu unterschiedlichen Zeitpunkten verstanden werden. Um die Orientierung einer Abtasteinheit 40a-b zu beeinflussen, sind nicht gezeigte Verstellungen vorgesehen. Dabei sind insbesondere die zu Figur 1 erläuterten Varianten denkbar. Beispielsweise wird eine Änderung durch Bewegen der Optiken 16a-b, 22a-b, Bewegen der Lichtsender 12a-b beziehungsweise Lichtempfänger 24a-b, Bewegen der Abtasteinheiten 40a-b selbst, Bewegen eines Drehspiegels oder Polygonspiegelrads insbesondere jeweils mittels Piezo-Aktorik, durch Aktivieren bestimmter VSCEL beziehungsweise SPADs oder durch Wellenlängen-Verstimmung eines Optical Phased Arrays bewirkt.

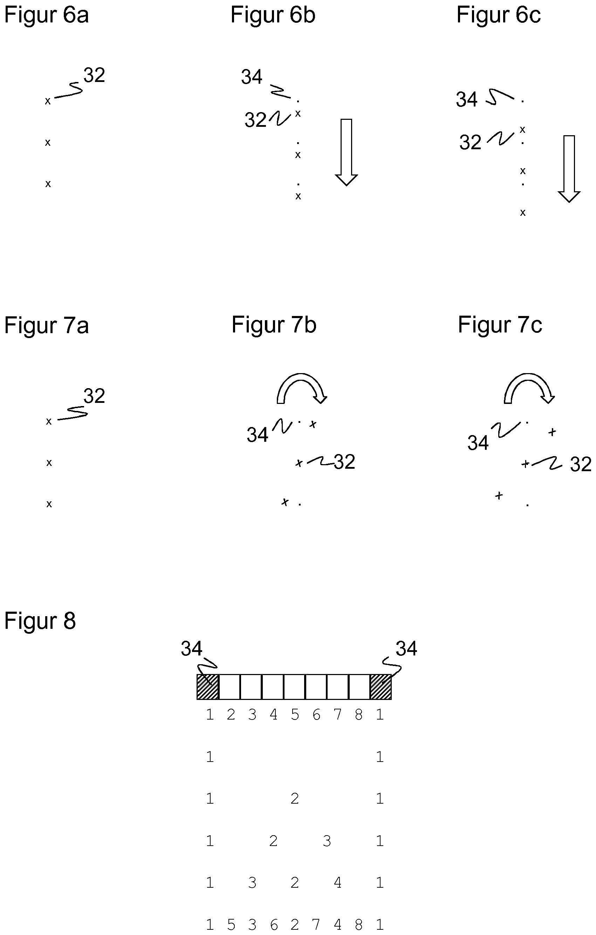

Die Figuren 6a-c zeigen Messpunkte 32 während einer Einzelmessung. Ganz ähnlich wie zu Figur 2a-d erläutert werden durch das Verkippen der Abtasteinheit 40a-b für Messwiederholungen gemäß Figur 6b-c die Messpunkte 32 aus dem ursprünglichen ersten Auflösungsraster 34 verschoben. In diesem Ausführungsbeispiel handelt es sich nicht wie in Figur 2a-d um eine Matrixanordnung, sondern nur um eine Zeilenanordnung. Dafür werden, wiederum nur als Beispiel, die Messpunkte 32 zweimal um je ein Drittel des Abstands des ersten Auflösungsrasters 34 verschoben. Dadurch werden in drei Umdrehungen sukzessive dreimal drei Abtastebenen erfasst, und somit ist die Auflösung in Elevation effektiv verdreifacht. Zweidimensionale Anordnungen von Messpunkten 32 sind auch bei einem Laserscanner möglich, es entsteht dann eine Mischung aus dichter liegenden Abtastebenen in Elevation und höherer Auflösung in Drehrichtung.

Die Figuren 7a-c illustrieren Messpunkte 32 ähnlich Figur 6a-c, nur dass hier die Abtasteinheit 40a-b nicht verkippt, sondern um ihre eigene Blickrichtung gedreht wird. Durch die Drehung werden die Abtastebenen dichter aneinander geführt, zudem entsteht ein Versatz der Messpunkte 32 in Drehrichtung. Erneut kann anstelle einer Linearanordnung auch eine 2D-Anordnung der Messpunkte 32 vorgesehen sein. Eine Abtasteinheit 40a-b kann auch sowohl verkippt als auch verdreht werden, die Effekte addieren sich dann.

Figur 8 illustriert einige Beispiele, wie die Messpunkte 32 jeweils zwischen den Messwiederholungen vorteilhaft verschoben werden können. Dabei zeigt die oberste Zeile lediglich ein fiktives Auflösungsraster, bei dem die dunklen Felder für das originäre erste Auflösungsraster 34 stehen. Das fiktive Auflösungsraster umfasst acht Messwiederholungen, wobei natürlich auch mehr oder weniger Messwiederholungen denkbar sind. Die weiteren Zeilen symbolisieren jeweils eine denkbare Ausführungsform, wobei eine Ziffer anzeigt, in welcher Messwiederholung ein Verschieben entsprechend der Position der Ziffer erfolgt.

In der Abfolge "123456781" wird die Lücke in dem ersten Auflösungsraster 34 gleichmäßig aufgeteilt. Eine Abfolge "1 1" ist nur vergleichshalber gezeigt, sie entspricht einer herkömmlichen Abtastung ohne Messwiederholung mit verschobenen Messpunkten 32. Die folgenden beiden Zeilen zeigen eine gleichmäßige Unterteilung wie die erste Zeile, jedoch mit zwei beziehungsweise drei statt acht Messwiederholungen.

Die untersten beiden Zeilen illustrieren bevorzugte Intervallhalbierungen. In der vorletzten Zeile halbiert die zweite Messwiederholung den Abstand, die dritte und vierte Messwiederholung setzen die Messpunkte 32 mittig in die bestehenden Lücken und halbieren den Abstand nochmals auf insgesamt ein Viertel. In der untersten Zeile wird das Vorgehen mit den nächsten vier Messwiederholungen fortgesetzt, um eine weitere Halbierung des Abstands zu erzielen. Durch eine Intervallhalbierung stehen sehr schnell Messwerte auch in höherer Auflösung zur Verfügung, die dann sukzessive weiter verdoppelt wird.

Den Ausführungsformen gemeinsam ist, dass vorab klar ist, nach welchen Messwiederholungen und damit welcher Messzeit ein Messwert mit einer bestimmten lateralen Ortsauflösung bereitsteht. Deshalb lässt sich eine Abwägung zwischen Messzeit und lateraler Ortsauflösung treffen. Im Sinne von Figur 8 ist als Beispiel eine hohe Zeitauflösung durch eine Abfolge "1 1 1 1 1 1 1 1 ...", eine hohe laterale Ortsauflösung durch eine Abfolge "1 5 3 6 2 7 4 8 1 ..." gegeben. Die Auslegung erfolgt nach dem Gedanken, dass für langsam bewegte Objekte eine hohe laterale Ortsauflösung wünschenswert ist, während für schnell bewegte Objekte diese hohe Ortsauflösung nicht so wichtig ist wie eine schnelle Bereitstellung eines Messwerts auch mit gröberer Ortsauflösung.

Bei einem Laserscanner können auch eine Auflösungsverbesserung in Rotationsrichtung gemäß Figur 4 mit einer Auflösungsverbesserung in Elevation gemäß Figur 6 oder 7 kombiniert werden.

Die herkömmlich starre und für alle Messbereiche gleiche Kopplung zwischen Messzeit und lateraler Ortsauflösung kann erfindungsgemäß durch Konfiguration eines Abtast- und Bewegungsschemas aufgelöst werden. Das ist durch Parametrierung im Feld möglich, die dann für eine gewisse Betriebsdauer beibehalten wird.

Es ist aber auch möglich, die Abwägung dynamisch aufgrund bereits vorliegender Messwerte vorzunehmen. Wurde beispielsweise erkannt, dass sich ein Objekt gar nicht oder kaum bewegt, so kann laterale Ortsauflösung verbessert werden und das Objekt mit längerer Messdauer bei mehr Messwiederholungen genauer vermessen werden.

Eine dynamische oder feste Anpassung ist auch lokal anpassbar. Für gewisse anfangs oder im Laufe des Betriebs festgelegte Teilregionen des Überwachungsbereichs 18 wird also grob und schnell, für andere Teilregionen genau und schnell gemessen. Das ist mit einer dynamischen Anpassung an tatsächlich erfasste Objekte kombinierbar.

Anpassungen bedeuten jeweils, dass die Verschiebung in Ausmaß und Richtung verändert wird, insbesondere lateral in X-Richtung, Y-Richtung oder durch ein Verkippen oder ein Verdrehen, und/oder dass das die Abfolge wie in einigen Varianten zu Figur 8 erläutert, verändert wird.

## Patentansprüche

1. Optoelektronischer Sensor (10) zur Erfassung von dreidimensionalen Bilddaten aus einem Überwachungsbereich (18), der eine Beleuchtungseinheit (12) zum auf Teilbereiche (32) konzentrierten Beleuchten des Überwachungsbereichs (18) mit moduliertem Sendelicht (14), einen Lichtempfänger (24) zum gleichzeitigen Lichtempfang des von Objekten in dem Überwachungsbereich (18) remittierten Sendelichts (20) an mindestens zwei Orten (32) in einem gegenseitigen Abstand entsprechend einem ersten Auflösungsraster (34) sowie eine Steuer- und Auswertungseinheit (30) aufweist, die dafür ausgebildet ist, Lichtlaufzeiten aus Eigenschaften des modulierten und remittierten Sendelichts (14, 20) zu bestimmen und durch mindestens eine Messwiederholung mit Lichtempfang von mindestens zwei anderen, gegen das erste Auflösungsraster (34) veränderten Orten (32) dreidimensionalen Bilddaten zu erfassen und die Beleuchtungseinheit (12) an die jeweiligen Orte (32) anzupassen,
**dadurch gekennzeichnet,**
**dass** die Orte (32) bei der mindestens einen Messwiederholung verschoben sind und durch die Verschiebung Messpunkte (32) in den Lücken des ursprünglichen ersten Auflösungsrasters (34) erfasst werden, wobei die Messpunkte (32) innerhalb einer Messwiederholung einen Abstand entsprechend dem ersten Auflösungsraster aufweisen und die Verschiebung kleiner ist als der Abstand zwischen zwei Punkten des ersten Auflösungsrasters, und dass somit nach der mindestens einen Messwiederholung insgesamt dreidimensionale Bilddaten mit einer verbesserten lateralen Auflösung in einem zweiten Auflösungsraster vorliegen, dessen Abstand durch die Verschiebungen entsteht und das feiner ist als das erste Auflösungsraster .

2. Sensor (10) nach Anspruch 1,
wobei die Beleuchtungseinheit (12) dafür ausgebildet ist, ein Beleuchtungsmuster mit auf die mindestens zwei Orte (32) im ersten Auflösungsraster (34) konzentrierter Beleuchtung zu erzeugen.

3. Sensor (10) nach Anspruch 1 oder 2,
wobei die Steuer- und Auswertungseinheit (30) dafür ausgebildet ist, bei einer Messwiederholung die Veränderung von Beleuchtung (12, 14) und Lichtempfang (20, 24) aneinander zu koppeln.

4. Sensor (10) nach einem der vorhergehenden Ansprüche,
wobei dem Lichtempfänger (24) eine veränderbare Empfangsoptik (22, 28) zugeordnet ist und/oder die Beleuchtungseinheit (12) eine veränderbare Sendeoptik (16, 26) aufweist, um durch Anpassung der Optik (16, 22) die Orte (32) zu verschieben.

5. Sensor (10) nach Anspruch 4,
wobei die Empfangsoptik (22, 28) und/oder die Sendeoptik (16, 26) eine durch elektrische Ansteuerung kippbare Flüssiglinse aufweist.

6. Sensor (10) nach einem der vorhergehenden Ansprüche,
wobei der Lichtempfänger (24) eine Matrixanordnung von SPAD-Lichtempfangselementen aufweist, die einzeln oder gruppenweise aktivierbar sind.

7. Sensor (10) nach einem der vorhergehenden Ansprüche,
wobei die Beleuchtungseinheit (12) eine Matrixanordnung von VCSEL-Sendeelementen aufweist, die einzeln oder gruppenweise aktivierbar sind.

8. Sensor (10) nach einem der vorhergehenden Ansprüche,
wobei die Steuer- und Auswertungseinheit (30) dafür ausgebildet ist, bei einer Messwiederholung die Orte (32) so zu verschieben, dass sich die Auflösung gegenüber dem ersten Auflösungsraster (34) sukzessive nach einem Intervallhalbierungsschema verdoppelt.

9. Sensor (10) nach einem der vorhergehenden Ansprüche,
der als Laserscanner ausgebildet ist und eine drehbare Ablenkeinheit (36) zur periodischen Abtastung des Überwachungsbereichs (18) aufweist.

10. Sensor (10) nach Anspruch 9,
der in Drehrichtung der Ablenkeinheit (36) mehrere Abtasteinheiten (40a-b) mit gegenseitigem Versatz ungleich dem ersten Auflösungsraster (34) aufweist.

11. Sensor (10) nach Anspruch 9 oder 10,
wobei die Abtasteinheiten (40a-b) verkippbar oder um ihre Blickrichtung drehbar ausgebildet sind.

12. Sensor (10) nach einem der vorhergehenden Ansprüche,
wobei die Steuer- und Auswertungseinheit (30) dafür ausgebildet ist, die Veränderungen der Orte (32) an die Objekte anzupassen.

13. Sensor (10) nach einem der vorhergehenden Ansprüche,
wobei die Steuer- und Auswertungseinheit (30) dafür ausgebildet ist, die Veränderungen der Orte (32) lokal unterschiedlich vorzunehmen.

14. Verfahren zur Erfassung von dreidimensionalen Bilddaten aus einem Überwachungsbereich (18), bei dem der Überwachungsbereich (18) auf Teilbereiche (32) konzentriert mit moduliertem Sendelicht (14) beleuchtet wird, an mindestens zwei Orten (32) remittiertes Sendelicht (20) von Objekten in dem Überwachungsbereich (18) in einem gegenseitigen Abstand entsprechend einem ersten Auflösungsraster (34) empfangen wird, Lichtlaufzeiten aus Eigenschaften des modulierten und remittierten Sendelichts (14, 20) bestimmt werden und durch mindestens eine Messwiederholung mit Lichtempfang von mindestens zwei anderen, gegen das erste Auflösungsraster (34) veränderten Orten (32) und an die jeweiligen Orte (32) angepasster Beleuchtung dreidimensionale Bilddaten erfasst werden,
**dadurch gekennzeichnet,**
**dass** die Orte (32) bei der mindestens einen Messwiederholung verschoben werden und durch die Verschiebung Messpunkte (32) in den Lücken des ursprünglichen ersten Auflösungsrasters (34) erfasst werden, wobei die Messpunkte (32) innerhalb einer Messwiederholung einen Abstand entsprechend dem ersten Auflösungsraster aufweisen und die Verschiebung kleiner ist als der Abstand zwischen zwei Punkten des ersten Auflösungsrasters, und dass somit nach der mindestens einen Messwiederholung insgesamt dreidimensionale Bilddaten mit einer verbesserten lateralen Auflösung in einem zweiten Auflösungsraster vorliegen, dessen Abstand durch die Verschiebungen entsteht und das feiner ist als das erste Auflösungsraster.

## Claims

1. An optoelectronic sensor (10) for detecting three-dimensional image data from a monitored region (18), comprising an illumination unit (12) for illuminating the monitored region (18) with modulated transmitted light (14) concentrated on partial regions (32), a light receiver (24) for simultaneously receiving the transmitted light (20) remitted by objects in the monitored region (18) at at least two locations (32) at a mutual distance corresponding to a first resolution raster (34), and a control and evaluation unit (30) configured to determine light times of flight from properties of the modulated and remitted transmitted light (14, 20) and to acquire three-dimensional image data by at least one measurement repetition with light reception from at least two other locations (32) which have been changed with respect to the first resolution raster (34) and to adapt the illumination unit (12) to the respective locations (32),
**characterized in that** the locations (32) are displaced for the at least one measurement repetition, and the displacement causes measurement points (32) to be detected in the gaps of the original first resolution raster (34), the measurement points (32) within a measurement repetition having a distance corresponding to the first resolution raster, and the displacement being smaller than the distance between two points of the first resolution raster, and **in that** thus, after the at least one measurement repetition, three-dimensional image data with an improved lateral resolution are provided in a second resolution raster whose distance results from the displacements and which is finer than the first resolution raster.

2. The sensor (10) according to claim 1,
wherein the illumination unit (12) is configured to generate an illumination pattern with illumination concentrated on the at least two locations (32) in the first resolution raster (34).

3. The sensor (10) according to claim 1 or 2,
wherein the control and evaluation unit (30) is configured to couple the change in illumination (12, 14) and light reception (20, 24) to one another in the event of a measurement repetition.

4. The sensor (10) according to any of the preceding claims,
wherein the light receiver (24) is assigned variable reception optics (22, 28) and/or the illumination unit (12) comprises variable transmission optics (16, 26) in order to displace the locations (32) by adapting the optics (16, 22).

5. The sensor (10) according to claim 4,
wherein the reception optics (22, 28) and/or the transmission optics (16, 26) comprise a liquid lens which can be tilted by electrical activation.

6. The sensor (10) according to any of the preceding claims,
wherein the light receiver (24) comprises a matrix arrangement of SPAD light receiving elements which can be activated individually or in groups.

7. The sensor (10) according to any of the preceding claims,
wherein the illumination unit (12) comprises a matrix arrangement of VCSEL transmission elements which can be activated individually or in groups.

8. The sensor (10) according to any of the preceding claims,
wherein the control and evaluation unit (30) is configured to shift the locations (32) during a measurement repetition in such a way that the resolution is successively doubled with respect to the first resolution raster (34) according to an interval halving scheme.

9. The sensor (10) according to any of the preceding claims,
which is configured as a laser scanner and comprises a rotatable deflection unit (36) for periodically scanning the monitoring area (18).

10. The sensor (10) according to claim 9,
which has, in the direction of rotation of the deflection unit (36), a plurality of scanning units (40a-b) with a mutual offset unequal to the first resolution raster (34).

11. The sensor (10) according to claim 9 or 10,
wherein the scanning units (40a-b) are formed tiltable or rotatable about their viewing direction.

12. The sensor (10) according to any of the preceding claims,
wherein the control and evaluation unit (30) is configured to adapt the changes in the locations (32) to the objects.

13. The sensor (10) according to any of the preceding claims,
wherein the control and evaluation unit (30) is configured to carry out the changes to the locations (32) locally differently.

14. A method for the acquisition of three-dimensional image data from a monitored area (18), in which the monitored area (18) is illuminated with modulated transmitted light (14) concentrated on partial regions (32), transmitted light (20) from objects in the monitored area (18) remitted at at least two locations (32) is received at a mutual distance corresponding to a first resolution raster (34), light times of flight are determined from properties of the modulated and remitted transmitted light (14, 20), and three-dimensional image data are acquired by at least one measurement repetition with light reception from at least two other locations (32) changed relative to the first resolution raster (34) and illumination adapted to the respective locations (32),
**characterized in that** the locations (32) are displaced for the at least one measurement repetition and the displacement causes measurement points (32) to be detected in the gaps of the original first resolution raster (34), the measurement points (32) within a measurement repetition having a distance corresponding to the first resolution raster and the displacement being smaller than the distance between two points of the first resolution raster, and **in that** thus, after the at least one measurement repetition, three-dimensional image data with an improved lateral resolution are provided in a second resolution raster whose distance results from the displacements and which is finer than the first resolution raster.

## Revendications

1. Capteur optoélectronique (10) pour la saisie de données d'image tridimensionnelles d'une zone à surveiller (18), comprenant une unité d'éclairage (12) pour l'éclairage concentré sur des zones partielles (32) de la zone à surveiller (18) avec de la lumière d'émission (14) modulée, un récepteur de lumière (24) pour la réception simultanée de la lumière d'émission (20) réémise par des objets dans la zone à surveiller (18) en au moins deux endroits (32) à une distance mutuelle correspondant à une première trame de résolution (34), et une unité de commande et d'évaluation (30) réalisée pour déterminer les temps de parcours de lumière à partir des propriétés de la lumière d'émission (14, 20) modulée et réémise et pour saisir des données d'image tridimensionnelles par au moins une répétition de mesure avec réception de la lumière depuis au moins deux autres endroits (32) changés par rapport à la première trame de résolution (34) et pour adapter l'unité d'éclairage (12) aux endroits respectifs (32),
**caractérisé en ce que**
lors de ladite au moins une répétition de mesure, les endroits (32) sont décalés, et des points de mesure (32) dans les lacunes de la première trame de résolution (34) initiale sont détectés par ledit décalage, les points de mesure (32) au sein d'une répétition de mesure ayant une distance correspondant à la première trame de résolution et le décalage étant plus petit que la distance entre deux points de la première trame de résolution, et **en ce que** après au moins une répétition de mesure, il résulte donc au total des données d'images tridimensionnelles avec une résolution latérale améliorée dans une deuxième trame de résolution, dont la distance est formée par les décalages et qui est plus fine que la première trame de résolution.

2. Capteur (10) selon la revendication 1,
dans lequel l'unité d'éclairage (12) est réalisée pour générer un motif d'éclairage avec un éclairage concentré sur lesdits au moins deux endroits (32) dans la première trame de résolution (34).

3. Capteur (10) selon la revendication 1 ou 2,
dans lequel l'unité de commande et d'évaluation (30) est réalisée pour coupler l'un à l'autre le changement d'éclairage (12, 14) et la réception de la lumière (20, 24) lors d'une répétition de la mesure.

4. Capteur (10) selon l'une des revendications précédentes,
dans lequel une optique de réception variable (22, 28) est associée au récepteur de lumière (24) et/ou l'unité d'éclairage (12) comporte une optique d'émission variable (16, 26) afin de décaler lesdits endroits (32) par adaptation de l'optique (16, 22).

5. Capteur (10) selon la revendication 4,
dans lequel l'optique de réception (22, 28) et/ou l'optique d'émission (16, 26) présente(nt) une lentille liquide qui peut être inclinée par pilotage électrique.

6. Capteur (10) selon l'une des revendications précédentes,
dans lequel le récepteur de lumière (24) comprend un agencement matriciel d'éléments récepteurs de lumière SPAD qui peuvent être activés individuellement ou en groupes.

7. Capteur (10) selon l'une des revendications précédentes,
dans lequel l'unité d'éclairage (12) comprend un agencement matriciel d'éléments d'émission VCSEL qui peuvent être activés individuellement ou en groupes.

8. Capteur (10) selon l'une des revendications précédentes,
dans lequel l'unité de commande et d'évaluation (30) est réalisée pour décaler les endroits (32) lors d'une répétition de mesure de telle sorte que la résolution soit successivement doublée par rapport à la première trame de résolution (34) selon un schéma de réduction de moitié des intervalles.

9. Capteur (10) selon l'une des revendications précédentes,
qui est conçu comme un scanner laser et qui possède une unité de déviation rotative (36) pour balayer périodiquement la zone à surveiller (18).

10. Capteur (10) selon la revendication 9,
comportant plusieurs unités de balayage (40a - b) dans le sens de rotation de l'unité de déviation (36) avec un décalage mutuel inégal à celui de la première trame de résolution (34).

11. Capteur (10) selon la revendication 9 ou 10,
dans lequel les unités de balayage (40a - b) sont réalisées pour pouvoir être inclinées ou tournées autour de leur direction de vision.

12. Capteur (10) selon l'une des revendications précédentes,
dans lequel l'unité de commande et d'évaluation (30) est réalisée pour adapter les changements des endroits (32) aux objets.

13. Capteur (10) selon l'une des revendications précédentes,
dans lequel l'unité de commande et d'évaluation (30) est réalisée pour effectuer les changements des endroits (32) de manière localement différente.

14. Procédé de saisie de données d'images tridimensionnelles d'une zone à surveiller (18), dans lequel la zone à surveiller (18) est éclairée de façon concentrée sur des zones partielles (32) par une lumière d'émission modulée (14), la lumière d'émission (20) réémise par des objets dans la zone à surveiller (18) est reçue en au moins deux endroits (32) à une distance mutuelle correspondant à une première trame de résolution (34), les temps de parcours de lumière sont déterminés à partir des propriétés de la lumière d'émission modulée et réémise (14, 20), et des données d'image tridimensionnelles sont saisies par au moins une répétition de mesure avec réception de la lumière depuis au moins deux autres endroits (32) changés par rapport à la première trame de résolution (34) et avec un éclairage adapté aux endroits respectifs (32),
**caractérisé en ce que**
lors de ladite au moins une répétition de mesure, les endroits (32) sont décalés, et des points de mesure (32) dans les lacunes de la première trame de résolution (34) initiale sont détectés par ledit décalage, les points de mesure (32) au sein d'une répétition de mesure ayant une distance correspondant à la première trame de résolution et le décalage étant plus petit que la distance entre deux points de la première trame de résolution, et **en ce que** après au moins une répétition de mesure, il résulte donc au total des données d'images tridimensionnelles avec une résolution latérale améliorée dans une deuxième trame de résolution, dont la distance est formée par les décalages et qui est plus fine que la première trame de résolution.
